Europäisches Patentamt

European Patent Office

Office européen des brevets

(19)

(11) Veröffentlichungsnummer: **0 128 854**
**A1**

(12) **EUROPÄISCHE PATENTANMELDUNG**

(21) Anmeldenummer: 84710019.5

(22) Anmeldetag: 08.06.84

(51) Int. Cl.³: **B 23 F 5/08,** B 23 F 1/02

(30) Priorität: 09.06.83 DE 3320914

(43) Veröffentlichungstag der Anmeldung: **19.12.84**
**Patentblatt 84/51**

(84) Benannte Vertragsstaaten: **AT CH FR GB IT LI NL SE**

(71) Anmelder: **BHS-Dr. Ing. Höfler Maschinenbau Gmbh, Industriestrasse 19, D-7505 Ettlingen-Oberweier (DE)**

(72) Erfinder: **Maier, Kurt, Langestrasse 112, D-7500 Karlsruhe 51 (DE)**

(74) Vertreter: **Eder, Eugen, Dipl.-Ing. et al, Patentanwälte Dipl.-Ing. E. Eder Dipl.-Ing. K. Schleschke Elisabethstrasse 34, D-8000 München 40 (DE)**

(54) Zahnradwälzschleifmaschine für gerad- oder schrägverzahnte Stirnräder.

(57) Die Erfindung bezieht sich auf eine Zahnradwälzschleifmaschine für gerad- oder schrägverzahnte Stirnräder, bei
der zur Erzeugung der Wälzbewegung ein auf dem Maschinenständer hin- und herverschiebbarer Hauptschlitten (2)
und ein darauf hin- und herverschiebbarer Hilfsschlitten (7)
vorgesehen sind. Die Bewegungsrichtung des Hilfsschlittens (7) läuft hierbei unter einem Winkel geneigt zur Bewegungsrichtung des Hauptschlittens (2). Der Hilfsschlitten (7)
ist mit einem Kulissenelement verbunden, das in einer Führungsbahn (9) bewegbar ist. Zur wahlweisen Verwendung
auch als Formschleifmaschine kann die Führungsbahn (9)
parallel zur Bewegungsrichtung (II) des Hilfsschlittens (7)
einschwenkbar und feststellbar sein. Damit ergibt sich eine
Zahnradwälzschleifmaschine, welche sowohl nach dem
Wälzschleifverfahren als auch nach dem Formschleifverfahren arbeiten kann.

EP 0 128 854 A1

Zahnradwälzschleifmaschine für gerad- oder
schrägverzahnte Stirnräder

Die Erfindung bezieht sich auf eine Zahnradwälzschleifmaschine für gerad- oder schrägverzahnte Stirnräder nach
dem Oberbegriff des Patentanspruches 1.

Als Stand der Technik ist hierbei bereits eine derartige
Zahnradrälzschleifmaschine bekannt, die nach dem Wälzschleifverfahren arbeitet (DE-PS 31 26 768). Diese Zahnradwälzschleifmaschine ist mit einem Wälzgetriebe mit
Rollenbogen und Spannwand ausgerüstet, wobei ein mit dem
Hauptschlitten verbundener Hilfsschlitten mit einem Kulissenelement in Verbindung steht, das in einer Führungsbahn
bewegbar ist. Die Führungsbahn ist winkeleinstellbar, wobei sich die Größe des Rundkreisdurchmessers eines herzustellenden Zahnrades durch die einstellbare Winkellage
der Führungsbahn im Maschinenbett bestimmt.

Weiterhin ist es allgemein bekannt, Zahnradwälzschleifmaschinen so auszubilden, daß sie nach dem Formschleifverfahren arbeiten. Diese Maschinen weisen zur Durchführung dieses Schleifverfahrens eine spezielle konstruktive Gestaltung auf.

Demgegenüber besteht die Aufgabe der vorliegenden Erfindung darin, eine Zahnradwälzschleifmaschine der eingangs
genannten Art zu schaffen, welche auf einfache Weise ohne große Umrüstung sowohl die Durchführung des Wälzschleifverfahrens als auch die Durchführung des Formschleifverfahrens ermöglicht.

Diese Aufgabe wird erfindungsgemäß dadurch gelöst, daß zur
wahlweisen Verwendung auch als Formschleifmaschine die Führungsbahn parallel zur Bewegungsrichtung des Hilfsschlittens einschwenkbar und feststellbar ist und daß
der Schleifschlitten auf einem höhenverstellbaren Verstellschlitten angeordnet ist, wobei entsprechend der
Verstellschlittenlage in Abhängigkeit des Schrägwinkels
und der Daten einer Verzahnung der Hilfsschlitten antreibbar ist.

Hierdurch ergibt sich der Vorteil, daß auf einfache Weise eine Zahnradwälzschleifmaschine geschaffen wird, welche sowohl nach dem Wälzschleifverfahren als auch nach
dem Formschleifverfahren arbeiten kann. Bei dem Formschleifverfahren führt der Hauptschlitten keine Bewegung
durch. Durch die Bewegung des Hilfsschlittens wird über
den Bandantrieb ausschließlich eine Drehung des Rollbogens ausgeführt, wodurch sich durch Umstellung der Führungsbahn des Kulissenelements die Möglichkeit des Formschleifverfahrens ergibt.

Es ist zwar bereits bekannt, bei einer Zahnradformschleifmaschine einen höhenverstellbaren Verstellschlitten einzusetzen, auf dem der Schleifscheibenträger-Winkel einstellbar gelagert ist (GB-PS 86 33 38). Diese bekannte Konstruktion ist nur für das Formschleifverfahren eingesetzt, wobei nicht die Möglichkeit besteht, auch nach dem Wälzschleifverfahren zu arbeiten.

In weiterer Ausgestaltung der Erfindung kann die Bewegungsrichtung des Hilfsschlittens im Winkel von $45^{\circ}$ zur Bewegungsrichtung des Hauptschlittens verlaufen, wobei die
Bewegungsrichtung des Kulissenelements ebenfalls im Winkel von $45^{\circ}$ zur Bewegungsrichtung des Hauptschlittens verläuft.

Nach einem anderen Merkmal der Erfindung kann über eine
elektronische Steuerung ein zusätzliches Beschleunigen oder
Verzögern der Rotation des Werkstücktisches durchführbar

- 3 -                                    0128854

sein, wobei das zusätzliche Beschleunigen oder Verzögern der Rotation des Werkstücktisches während der Bewegung des Schleifschlittens variabel durchführbar ist. Hierdurch wird auf einfache Weise eine Spanzustellung entsprechend der gewünschten Richtung (linke oder rechte Zahnflanke) erreicht. Weiterhin läßt sich dadurch eine Balligkeit für die linke oder rechte Zahnflanke auf einfache Weise herstellen.

Die Erfindung wird nachfolgend anhand eines in der Zeichnung dargestellten Ausführungsbeispiels näher beschrieben. In der Zeichnung zeigen:

Fig. 1    eine schematische Grundkonstruktion des Wälzgetriebes in Draufsicht;

Fig. 2    eine schematische Darstellung einer Zahnradschleifmaschine mit Schleifschlitten in Vorderansicht und Hauptschlitten in Draufsicht.

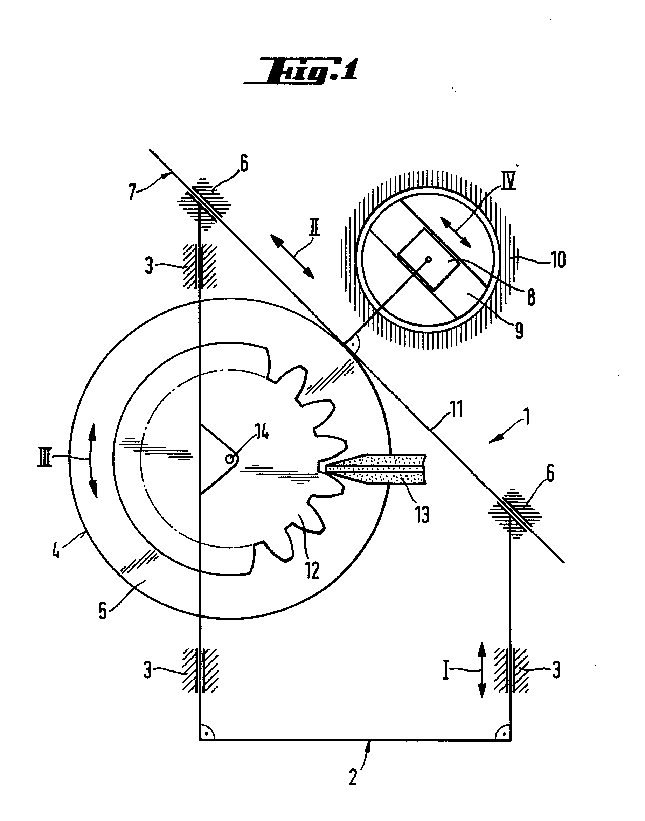

In Fig. 1 ist eine schematische Grundkonstruktion des erfindungsgemäßen Wälzgetriebes dargestellt. Hierbei besteht dieses Wälzgetriebe 1 aus einem Hauptschlitten 2 und einem Hilfsschlitten 7. Der Hauptschlitten 2 ist in Führungen 3 in Pfeilrichtung I am Maschinenbett hin- und herbewegbar. Weiterhin weist der Hauptschlitten 2 Führungen 6 auf, in welchen der Hilfsschlitten 7 schräg zur Bewegungsrichtung des Verschiebeweges bewegt werden kann, so daß sich ein Verschiebeweg II für den Hilfsschlitten 7 ergibt.

Der Hilfsschlitten seinerseits ist mit einem Kulissenelement 8 verbunden, welches in einer Führungsbahn 9 bewegbar ist. Die Führungsbahn 9 ist winkeleinstellbar im Maschinenbett 10 angeordnet.

Der Hilfsschlitten 7 weist weiterhin einen Bandantrieb 11 auf, welcher mit einem Rollbogen 4 zusammenwirkt. Dieser Rollbogen 4 ist um seine Achse 14 drehbar auf dem Hauptschlitten 2 gelagert. Koaxial auf der Achse befindet sich ein Werkstücktisch 5, auf welchem ein zu bearbeitendes Zahnrad 12 angeordnet ist. Über eine Schleifscheibe 13 läßt sich nach dem Wälzschleifverfahren eine Evolventenverzahnung erzielen, wenn die Führungsbahn 9 des Kulissenelementes 8 im Winkel zur Bewegungsrichtung II des Hilfsschlittens 7 verläuft. Hierbei bestimmt sich die Grösse des Grundkreisdurchmessers des herzustellenden Zahnrades durch die einstellbare Winkellage der Führungsbahn 9 im Maschinenbett 10.

Erfindungsgemäß besteht nun die Möglichkeit, daß das Kulissenelement 8 nach Fig. 1 mit seiner Führungsbahn 9 parallel zur Bewegungsrichtung II des Hilfsschlittens 7 einschwenkbar und feststellbar ist. Durch diese Maßnahme wird erreicht, daß im Gegensatz zum Wälzschleifen der Hauptschlitten 2 keine Bewegung in Richtung I ausführt. Über den Bandantrieb 11 wird ausschließlich eine Drehung des Rollbogens 4 in Pfeilrichtung III ausgeführt, und zwar durch die Bewegung des Hilfsschlittens 7 in Richtung II.

Die Bewegungsrichtung des Kulissenelementes 8 sowie des Hilfsschlittens 7 kann hierbei im Winkel von 45° zur Bewegungsrichtung I des Hauptschlittens verlaufen.

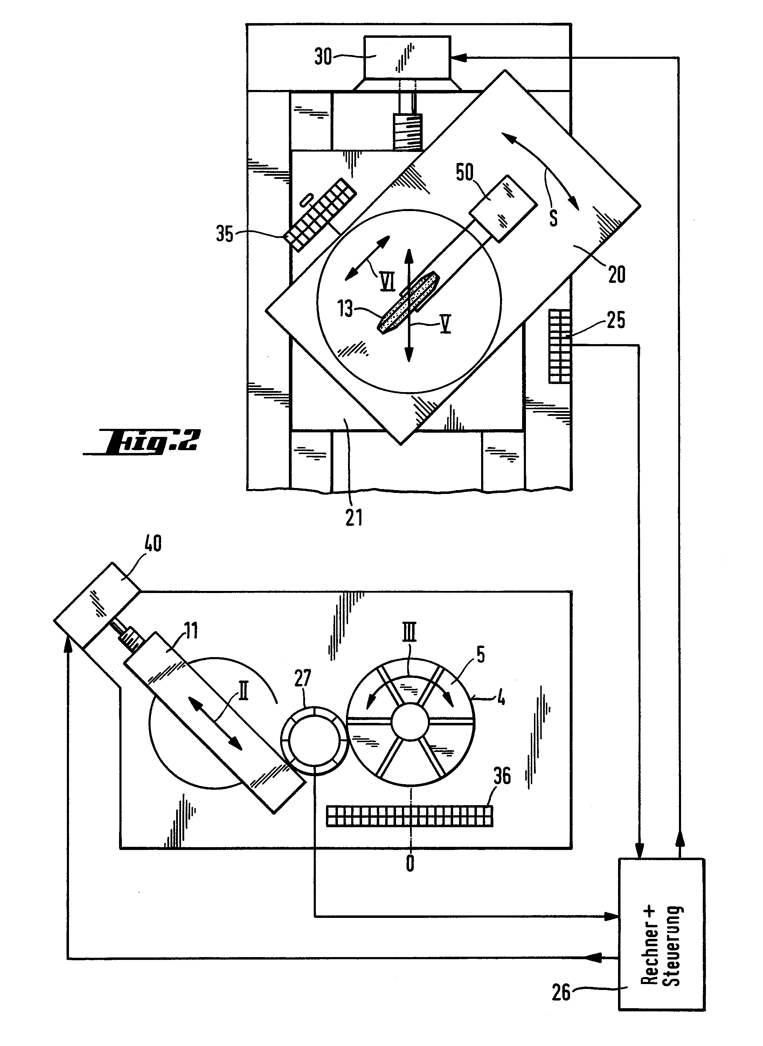

In Fig. 2 ist eine Zahnradschleifmaschine, teils in Vorderansicht, teils in Draufsicht, schematisch dargestellt. Wie ersichtlich, ist hierbei ein Werkstücktisch 5 sowie ein Rollbogen 4 vorgesehen. Dieser Rollbogen 4 ist unter Zwischenschaltung eines elektronischen Gebers 27 von dem Bandantrieb 11 antreibbar. Dieser Bandantrieb 11 ist seinerseits mit einer elektronischen Steuerung verbunden.

Weiterhin ist ein Schleifschlitten 20 schwenkbar auf einem Verstellschlitten 21 vertikal bewegbar, wie in Fig.2 in Voransicht dargestellt. Über einen elektronischen Geber 25 erfolgt eine Überwachung mit Hilfe der elektronischen Steuerung 26, wobei die Position des Verstellschlittens 21 in Abhängigkeit zur Verzahnung geführt wird. Die Schleifscheibe 13 führt hierbei einen Vorschub in Richtung V aus. Für den Schrägungswinkel der Verzahnung ist eine Schwenkung in Pfeilrichtung S des Schleifschlittens 20 möglich. In dieser, in Fig. 2 dargestellten Lage arbeitet die Zahnradschleifmaschine nach dem Formschleifverfahren, d.h. das Kulissenelement 8 mit seiner Führungsbahn 9 ist entsprechend Fig. 1 parallel zur Bewegungsrichtung II des Hilfsschlittens 7 eingeschwenkt. Wird nun nach Fig. 1 die Führungsbahn 9 im Winkel zur Bewegungsrichtung II des Hilfsschlittens 7 verstellt, so kann die Zahnradschleifmaschine nach dem Wälzschleifverfahren gemäß DE-PS 31 26 768 arbeiten. Hierfür dienen die in Fig. 2 dargestellten elektronischen Geber 35 und 36, welche ihrerseits in nicht dargestellter Weise mit der elektronischen Steuerung 26 verbunden sind und beim Formschleifen überwachen, daß die Schleifscheibe bei Bewegung in Richtung V genau in Achsrichtung zum Werkstücktisch 5 zeigt.

Der Antrieb erfolgt beim Wälzschleifverfahren über die Antriebseinheit 50 in Richtung VI und beim Formschleifverfahren für den Schlitten über die Antriebseinheit 30 in Richtung V, welche ihrerseits mit der elektronischen Steuerung 26 in Verbindung steht. Für den Antrieb des Bandantriebes 11 ist eine Antriebseinheit 40 vorgesehen, welche ihrerseits ebenfalls mit der elektronischen Steuerung 26 verbunden ist.

Bei dem Formschleifverfahren ist eine Rotation des Werkstücktisches 5 entsprechend der Schleifschlittenlage in Abhängigkeit des Schrägwinkels und der Daten einer Verzahnung über den Rollbogen 4 durchführbar. Hierbei kann
über die elektronische Steuerung ein zusätzliches Drehen
oder Verzögern der Rotation des Werkstücktisches 5 durchführbar sein. Die elektronische Steuerung ist also so
ausgeführt, daß eine Zusatzbewegung überlagert werden
kann. Diese Zusatzbewegung ermöglicht ein zusätzliches
Drehen oder Verzögern des Werkstücktisches 5, um so eine
Spanzustellung entsprechend der gewünschten Richtung
(linke und rechte Zahnflanke) zu erreichen. Weiterhin ist
die elektronische Steuerung 26 so ausgelegt, daß diese
Drehbewegung während der Schleifschlittenbewegung variabel vorgegeben werden kann (zur Erzielung einer Balligkeit der Zahnflanken), wobei diese für die rechte und linke Flanke unterschiedlich sein kann.

In jedem Fall wird auf einfache Weise ein Wälzgetriebe
bei einer Zahnradschleifmaschine geschaffen, welche es
ermöglicht, daß diese Zahnradschleifmaschine sowohl nach
dem Wälzschleifverfahren als auch nach dem Formschleifverfahren arbeiten kann.

0128854

P a t e n t a n s p r ü c h e :

1. Zahnrad-Wälzschleifmaschine für gerad- oder schrägverzahnte Stirnräder, mit einer auf einem Schleifschlitten angeordneten Schleifscheibe und mit einem Wälzgetriebe, bei dem zur Erzeugung der Wälzbewegung ein auf dem Maschinenständer hin- und herverschiebbarer Hauptschlitten und ein darauf hin- und herverschiebbarer Hilfsschlitten vorgesehen sind, wobei der Hauptschlitten den translatorischen Anteil der Wälzbewegung in das System einbringt, mit einer mit dem Hilfsschlitten zusammenwirkenden Einrichtung zur Erzeugung des rotatorischen Anteils der Wälzbewegung in Form einer um eine Drehachse einstellbaren Führungsbahn in einem darin gleitend aufgenommenen Kulissenstein, der in der Führungsbahn hin- und herverschiebbar, wobei der Hilfsschlitten über einen Bandantrieb einen Rollbogen antreibt, welcher mit dem Werkstück-Tisch in Verbindung steht und der vom Rollbogen drehantreibbare Werkstück-Tisch auf dem Hauptschlitten drehbar gelagert ist und mit mindestens einem Wälzgetriebe-Antrieb, dadurch gekennzeichnet, daß zur wahlweisen Verwendung auch als Formschleifmaschine die Führungsbahn (9) parallel zur Bewegungsrichtung (II) des Hilfsschlittens (7) einschwenkbar und feststellbar ist und daß der Schleifschlitten (20) auf einem höhenverstellbaren Verstellschlitten (21) angeordnet ist, wobei entsprechend der Verstellschlittenlage in Abhängigkeit des Schrägwinkels und der Daten einer Verzahnung der Hilfsschlitten (7) antreibbar ist.

2. Zahnradwälzschleifmaschine nach Anspruch 1, wobei die Bewegungsrichtung des Hilfsschlittens im Winkel von 45° zur Bewegungsrichtung des Hauptschlittens verläuft, dadurch gekennzeichnet, daß die Bewegungsrichtung des

0128854

Kulissenelements (8) im Winkel von 45° zur Bewegungsrichtung (I) des Hauptschlittens (2) verläuft.

3. Zahnradwälzschleifmaschine nach Anspruch 1, dadurch
   gekennzeichnet, daß über eine elektronische Steuerung
   ein zusätzliches Beschleunigen oder Verzögern der
   Rotation des Werkstück-Tisches (5) durchführbar ist.

4. Zahnradwälzschleifmaschine nach Anspruch 3, dadurch
   gekennzeichnet, daß das zusätzliche Beschleunigen oder
   Verzögern der Rotation des Werkstück-Tisches (5)
   während der Bewegung des Schleifschlittens (20) variabel
   durchführbar ist.

# Fig.1

**Fig.2**

Rechner + Steuerung

**Europäisches Patentamt**

**EUROPÄISCHER RECHERCHENBERICHT**

0128854
Nummer der Anmeldung

EP 84 71 0019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | EP-A-0 069 274 (HÖFLER) | 1 | B 23 F 5/08<br>B 23 F 1/02 |
| A,D | GB-A- 863 338 (BROWN) | 1 | |
| A | CH-A- 418 784 (CLEEF) | 1 | |
| A | DE-A-2 840 940 (MAAG) | 1 | |
| A | CH-A- 517 547 (HÖFLER) | 1 | |
| | ----- | | **RECHERCHIERTE SACHGEBIETE (Int. Cl. 3)**<br><br>B 23 F 1/00<br>B 23 F 5/00<br>B 23 F 23/00 |

Der vorliegende Recherchenbericht wurde für alle Patentansprüche erstellt.

| Recherchenort<br>DEN HAAG | Abschlußdatum der Recherche<br>05-09-1984 | Prüfer<br>HORVATH R.C. |
|---|---|---|